# EUROPÄISCHE PATENTSCHRIFT

(11) **EP 2 100 200 B1**
(45) Veröffentlichungstag und Bekanntmachung des Hinweises auf die Patenterteilung: **06.04.2011**
(21) Anmeldenummer: 07846647.1
(22) Anmeldetag: 17.11.2007
(51) Int. Cl.: G05D 7/01

(54) **DURCHFLUSSMENGENREGLER**
Flow rate regulator
RÉGULATEUR DE DÉBIT

(30) Priorität: 06.12.2006 DE 202006018577 U; 06.12.2006 DE 102006057795; 28.02.2007 DE 102007009717; 28.02.2007 DE 202007002904 U
(43) Veröffentlichungstag der Anmeldung: 16.09.2009
(73) Patentinhaber: Neoperl GmbH, 79379 Müllheim (DE)
(72) Erfinder: ZOLLER, Uwe, 08911 Badalona (Barcelona) (ES)
(74) Vertreter: Maucher, Wolfgang
(86) Internationale Anmeldenummer: PCT/EP2007/009954
(87) Internationale Veröffentlichungsnummer: WO 2008/067903

(56) Entgegenhaltungen:
- DE-U1- 20 304 659
- GB-A- 1 603 982
- US-A- 3 847 178

## Beschreibung

Die Erfindung betrifft eine sanitäre Einsetzpatrone, die in eine sanitäre Flüssigkeitsleitung einsetzbar ist und einen Durchflussmengenregler mit einem elastischen Drosselkörper hat, der zwischen sich und einer Gehäusewandung einen sich unter dem Druck des durchströmenden Fluids verändernden Steuerspalt begrenzt, wobei dem Durchflussmengenregler zumindest ein By-Pass- und/oder Reinigungskanal zugeordnet ist, dessen wenigstens einer Kanal-Einlass in Strömungsrichtung vor dem Steuerspalt und dessen mindestens einer Kanal-Auslass in Strömungsrichtung nach dem Steuerspalt, angeordnet ist, und wobei in By-Pass- und/der Reinigungskanal ein sich unter dem Druck des zuströmenden Fluids von einer Offenstellung gegen eine Rückstellkraft in eine Schließstellung bewegbares Ventils vorgesehen ist, das in seiner Schließstellung den By-Pass-und/oder Reinigungskanal verschließt.

Durchflussmengenregler sind bereits in verschiedenen Ausführungen bekannt. Die vorbekannten Durchflussmengenregler weisen meist einen ringförmigen Drosselkörper aus elastischem Material auf, der zwischen sich und einer Gehäusewandung einen sich unter dem Druck des durchströmenden Fluids verändernden Steuerspalt begrenzt. Mit steigendem Druck des durchströmenden Fluids wird der Drosselkörper zunehmend in Regelprofilierungen gepresst, die an der als zentraler Regelkern, oder als äußere Umfangswandung ausgestalteten Gehäusewandung vorgesehen sind. Da sich der Steuerspalt mit steigendem Druck des Fluids verengt, vermag ein solcher Durchflussmengenregler die pro Zeiteinheit durchströmende Fluidmenge auf einen festgelegten Maximalwert einzuregeln.

Während die Fluidmenge bei hohen Drücken des zuströmenden Fluids auf einen festgelegten Maximalwert einregelbar ist, stellt der Steuerspalt der vorbekannten Durchflussmengenregler bei geringen Drücken ein derartiges Strömungshindernis dar, dass nur vergleichsweise geringe Mengen des durchströmenden Fluids passieren können.

Aus der US-A-3 847 178 ist bereits eine sanitäre Einsetzpatrone bekannt, die als Durchflussmengenregler ausgebildet und in eine sanitäre Flüssigkeitsleitung einsetzbar ist. In dem dort in Fig. 13 dargestellten Ausführungsbeispiel weist die vorbekannte Einsetzpatrone einen zentralen Regelkern auf, der hülsenförmig ausgestaltet ist und an seinem vom Wasserstrom umspülten Außenumfang eine Regelprofilierung hat, die ein elastischer Drosselkörper umgreift. Dieser Drosselkörper begrenzt zwischen sich und der am Außenumfang des hülsenförmigen Regelkerns vorgesehenen Regelprofilierung einen Steuerspalt, der sich unter dem Druck der durchströmenden Flüssigkeit in seinem lichten Querschnitt derart verändert, dass die pro Zeiteinheit durchströmende Flüssigkeitsmenge vergleichmäßigt und auf einen festgelegten Maximalwert eingeregelt wird. Um jegliche Unregelmäßigkeiten im niederen Druckbereich zu vermeiden und um in niederen Druckbereichen bereits eine ausreichendes Wassermenge zur Verfügung stellen zu können, ist der Hülseninnenraum des zentralen Regelkerns als By-Pass-Kanal ausgestaltet, der im Bereich seines Kanaleinlasses ein Ventil hat, das sich unter dem Druck der durchströmenden Flüssigkeit von einer Offenstellung gegen die Kraft einer Rückstellfeder in die Schließstellung bewegt. Dieser By-Pass-Kanal stellte in niederen Druckbereichen einen größeren lichten Durchflussquerschnitt zur Verfügung; in demgegenüber höheren Druckbereichen ist der By-Pass-Kanal durch das Ventil, verschlossen und der Durchflussquerschnitt auf den Steuerspalt des Durchflussmengenreglers begrenzt.

Der Flüssigkeitsstrahl fließt aus dem aus der US-A-3 847 178 vorbekannten Durchflussmengeregler zwar auf einen festen Maximalwert eingeregelt -, ansonsten aber unkontrolliert aus. Um den Flüssigkeitsstrahl zu einem homogenen, nicht-spritzenden und gegebenenfalls auch perlend-weichen Wasserstrahl zu formen, ist dem vorbekannten Durchflussmengenregler ein üblicher Strahlregler nachzuschalten. Derartige Durchflussmengenregler aber werden, ebenso wie Strahlregler, durch in der Flüssigkeit mitgeführte Schmutzpartikel in ihrer Funktion beeinträchtigt, die sich vor oder in dem Steuerspalt des Durchflussmengenreglers oder in der Strahlzerlegeeinrichtung des Strahlreglers festsetzen können.

Aus der DE 203 04 659 U1 ist bereits eine sanitäre Einsetzeinheit bekannt, die ein Zuflusseitiges Vorsatzsieb, einen Durchflussmengenregler sowie einen Strahlregler aufweist.

Es besteht daher die Aufgabe, eine sanitäre Einsetzpatrone zu schaffen, die bei geringen Drücken der durchströmenden Flüssigkeit vergleichsweise große Flüssigkeitsmengen passieren lässt, während demgegenüber bei hohen Fluiddrücken die pro Zeiteinheit durchströmende Fluidmenge auf einen annähernd gleichbleibenden Maximalwert eingeregelt werden soll, wobei insbesondere auch bei hohen Drücken ein homogener, nicht-spritzender und gegebenenfalls perlend-weicher Wasserstrahl gewünscht wird.

Die erfindungsgemäße Lösung dieser Aufgabe besteht gemäß dem beiliegenden Vorschlag für ein neues Schutzbegehren insbesondere darin, dass der Durchflüssmengenregler zwischen einem Vorsatz- oder Filtersieb und einem Strahlregler angeordnet ist, dass der Kanal-Einlass des By-Pass- und/oder Reinigungskanals zuströmseitig vor dem Vorsatz- oder Filtersieb angeordnet ist, und dass der Kanal-Auslass des Hy-Pass- und/oder Reinigungskanals dem Strahlregler oder zumindest einem Strahlzerleger des Strahlreglers abströmseitig nachgeschaltet ist.

Die erfindungsgemäße Einsetzpatrone weist über einen Durchflussmengenregler hinaus auch einen Strahlregler auf. Während der Durchflussmengenregler gewährleistet, dass der pro Zeiteinheit durchströmende Flüssigkeitsstrom einen bestimmten Maximalwert nicht übersteigt, kann der abströmseitig am Wasser-Auslass vorgesehene Strahlregler einen homogenen, nicht-spritzenden und gegebenenfalls perlend-weichen Gesamtstrahl formen. Dabei ist dem Durchflussmengenregler ein Vörsatz- oder Filtersieb vorgeschaltet, das eine ungehinderte Punktion des Durchflussmengenreglers sowie der ihm nachgeschalteten Funktionseinheiten gewährleistet und eine Verstopfung dieser Funktionseinheiten durch im Fluidstrom mitgerissene Schmutzpartikel verhindert. Da der Kanal-Einlass des By-Pass-Kanals zuströmseitig vor dem Vorsatz- oder Filtersieb angeordnet ist, können auch größere Schmutzpartikel durch den By-Pass-Kanal passieren, ohne dass die Gefahr besteht, dass diese Schmutzpartikel beispielsweise im Bereich des Steuerspaltes blockierten. Da der Kanal-Auslass des By-Pass- oder Reinigungskanals dem Strahlregler selbst oder zumindest seinem Strahlzerleger abströmseitig nachgeschaltet ist, können auch größere Schmutzpartikel passieren, ohne dass die Gefahr besteht, dass der Strahlregler oder zumindest sein Strahlzerleger durch derartige Schmutzpartikel blockiert und dadurch in seiner Funktion behindert wird. Durch diesen By-Pass-Kanal kann in der Offenstellung des Ventils zumindest eine zusätzliche Teilmenge des Volumenstroms ungehindert durchfließen, ohne den zunächst nur als Strömungshindernis wirkenden Steuerspalt des Durchflussmengenreglers passieren zu müssen. Steigt der Druck des durchströmenden Fluids und wird ein festgelegter Druck überschritten, bewegt sich das Ventil von seiner Offenstellung gegen eine Rückstellkraft in seine Schließstellung, so dass der By-Pass-Kanal verschlossen ist. Ist der By-Pass-Kanal verschlossen, kann das durchströmende Fluid nur durch den Steuerspalt passieren, der mit dem pro Zeiteinheit erhöhten Volumenstrom seine Regelfunktion aufnimmt. Im Vergleich zu vorbekannten Durchflussmengenreglern ist die Durchflusskurve des erfindungsgemäß vorgesehenen Durchflussmengenreglers im niederen Druckbereich signifikant erhöht, was zu einer enormen Komfortsteigerung für Anwendungen mit geringem Druck führt.

Besonders vorteilhaft ist eis, wenn das Vorsatz- oder Filtersieb trichterförmig ausgestaltet. Auf diese Weise wird zusätzlich sichergestellt, dass größere Schmutzpartikel den erfindungsgemäßen Durchflussmengenregler allein durch den By-Pass-Kanal passieren.

Eine bevorzugte Ausführungsform gemäß der Erfindung sieht vor, dass der Durchflussmengenregler ringförmig ausgestaltet ist und die den By-Pass-Kanal umgrenzende Kanalwandung umgreift.

Eine Ausführungsform gemäß der Erfindung sieht vor, dass das im By-Pass-Kanal vorgesehene Ventil einen Ventilkörper hat, der im Durchflussmengenregler gegen eine Rückstellkraft verschieblich geführt ist.

Möglich ist auch, dass ein durch den Durchflussmengenregler und gegebenenfalls auch durch den ihm nachgeschalteten Strahlregler hindurch geführter und zumindest bis zum Wasser-Auslass vorstehender Teilbereich des Ventilkörpers als Handhabe zum manuellen Betätigen des Ventils ausgestaltet ist. Steht der ventilkörper mit seinem als Handhabe dienenden Teilbereich über den Wasser-Auslass vor, kann der Ventilkörper auch bei durchströmendem Fluid entgegen der Durchströmrichtung des Fluids in die Offenstellung bewegt werden, so dass Schmutzpartikel, die sich im Bereich des By-Pass-Kanals verfangen haben, durch den By-Pass-Kanal passieren können. Der By-Pass-Kanal einer solchen Ausführungsform hat daher eine zusätzliche Reinigungsfunktion.

Eine weitere bevorzugte Ausführungsform gemäß der Erfindung sieht vor, dass der Ventilkörper einen im Durchflussmengenregler verschieblich geführten Führungszapfen hat. Dabei ist es besonders zweckmäßig, wenn der Führungszapfen rohrförmig ausgestaltet ist, wenn das Rohrinnere des Führungszapfens als By-Pass-Kanal ausgestaltet ist und wenn im zuströmseitigen Endbereich des Führungszapfens zumindest ein Kanal-Einlass und im abströmseitigen Endbereich des Führungszapfens wenigstens ein Kanal-Auslass vorgesehen ist.

Zweckmäßig ist es, wenn die abströmseitige und vorzugsweise zumindest bis zum Wasser-Auslass vorstehende Stirnöffnung des Führungszapfens als Kanal-Auslass ausgestaltet ist. Auf diese Weise können die im Fluid mitgeführten Schmutzpartikel durch den als By-Pass-Kanal ausgestalteten Führungszapfen abgeführt werden, ohne dass der Durchflussmengenregler sowie ihm gegebenenfalls nachgeschaltete Funktionseinheiten durch solche Schmutzpartikel verstopft und in ihrer Funktion beeinträchtigt werden können.

Besonders vorteilhaft ist es, wenn der abströmseitige Endbereich des Führungszapfens kronenförmig ausgestaltet ist. Ist dieser abströmseitige Endbereich des Führungszapfens kronenförmig ausgestaltet, kann der Führungszapfen und mit ihm das Ventil durch Fingerdruck auf den abströmseitigen Endbereich manuell gegen die Rückstellkraft angehoben und in die Offenstellung bewegt werden, so dass im Bereich des By-Pass-Kanals angesammelte Schmutzpartikel durch den By-Pass-Kanal abgeführt und über den kronenförmig ausgestalteten Endbereich beseitigt werden können.

Eine weitere bevorzugte Ausführungsform gemäß der Erfindung sieht vor, dass der Ventilkörper pilz- oder tellerförmig ausgestaltet ist. Dabei ist es besonders vorteilhaft, wenn der Ventilkörper zumindest in einem schirmförmigen Teilbereich elastisch ausgestaltet ist und außenumfangsseitig eine umlaufende Dichtlippe hat, und dass der schirmförmige Teilbereich von einer Offenstellung gegen die Elastizität des elastischen Materials in eine Schließstellung bewegbar ist. Ein solcher Ventilkörper erfordert nur einen vergleichsweise geringen konstruktiven Aufwand.

Besonders vorteilhaft ist es, wenn der den Kanal-Einlass umgrenzende Randbereich des Vorsatz- oder Filtersiebes als mit dem Ventilkörper zusammenwirkender Ventilsitz ausgestaltet ist.

Um die im Wasser mitgeführten Schmutzpartikel gegebenenfalls vor dem Durchflussmengenregler und den ihm nachgeschalteten Funktionseinheiten vorübergehend ansammeln zu können, ist es zweckmäßig, wenn das trichterförmige Vorsatz- oder Filtersieb eine im wesentlichen konvexe oder konkave Trichterform hat. Insbesondere in einer konkaven Trichterform können sich die Schmutzpartikel während des Betriebs des erfindungsgemäßen Durchflussmengenreglers ansammeln, um bei nachlassendem Druck des Fluids und/oder Öffnen des Ventils durch den By-Pass-Kanal ausfließen zu können. Bei einer solchen Ausführungsform wird die zusätzliche Reinigungsfunktion des erfindungsgemäßen Durchflussmengenreglers noch zusätzlich begünstigt.

Weitere Merkmale gemäß der Erfindung ergeben sich aus der nachfolgenden Beschreibung erfindungsgemäßer Ausführungsbeispiele sowie den Ansprüchen. Nachstehend wird die Erfindung anhand bevorzugter Ausführungsbeispiele noch näher erläutert. Es zeigt:
- Fig. 1: eine in einem Längsschnitt dargestellte sanitäre Einsetzpatrone, die in eine sanitäre Flüssigkeit- leitung einsetzbar ist und einen Durchflussmengen-
- regler: hat, der einem Strahlregler in Strömungs- richtung vorgeschaltet ist, wobei der Durchfluss- mengenregler einen By-Pass-Kanal- aufweist, der in seiner hier gezeigten Offenstellung eine zusätz- liche Teilmenge des Volumenstroms passieren lässt,
- Fig. 2: die ebenfalls in einem Längsschnitt gezeigte Einsetzpatrone aus Fig. 1 in der Schließstellung des im Durchflussmengenregler vorgesehenen By-Pass- Kanals,
- Fig. 3: eine mit Fig. 1 und 2 vergleichbare Einsetzpatrone in der Offenposition des im Durchflussmengenregler vorgesehenen By-Pass-Kanals, wobei dem Durchfluss- mengenregler ein im Vergleich zu Fig. 1 und 2 ab- weichend ausgestalteter Strahlregler nachgeschaltet ist,
- Fig. 4: die Einsetzpatrone aus Fig. 3 in der Schließpo- sition des By-Pass-Kanals,
- Fig. 5: eine sanitäre Einsetzpatrone mit einem Durchflussmengenregler, der in seinem By-Pass-Kanal ein Ventil mit einem als Führungszapfen ausge- stalteten Ventilkörper hat, wobei der Ventilkörper an seinem über den Wasser-Auslass vorstehenden Teilbereich als Handhabe zum manuellen Betätigen des Ventilkörpers ausgestaltet ist und wobei in
- Fig. 6: Fig. 5 sich das Ventil in seiner Offenstellung be- findet, die Einsetzpatrone aus Fig. 5 in der Schließ- stellung des im Durchflussmengenregler vorgesehenen Ventils, und
- Fig. 7: die Durchflusskurve einer der in den Fig. 1 bis 6 gezeigten Einsetzpatronen (durchgezogene Linie) im Vergleich zur Durchflusskurve eines herkömmlichen Durchflussmengenreglers (strich-punktierte Linie).

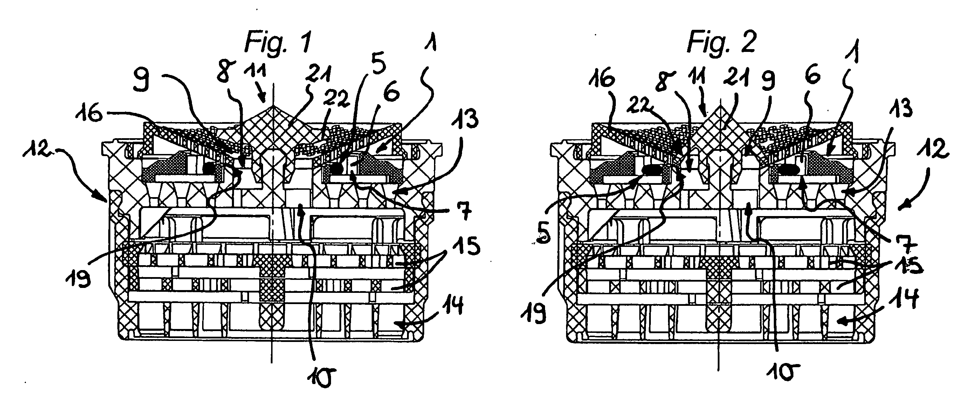

In den Fig. 1 bis 6 sind verschiedene Ausführungen einer sanitären Einsetzpatrone dargestellt, die in eine sanitäre Flüssigkeitsleitung einsetzbar ist und einen Durchflussmengenregler 1, 2 oder 3 hat, der zwischen einem Vorsatz- oder Filtersieb (16) und einem Strahlregler (12) angeordnet ist. Die sanitären Einsetzpatronen können in das Auslaufmundstück einer nicht weiter dargestellten sanitären Auslaufarmatur eingesetzt werden. Möglich ist auch, vergleichbare Einsetzpatronen in eine Flüssigkeitsleitung zwischenzuschalten.

Die Durchflussmengenregler 1, 2 oder 3 sind dazu bestimmt, auch bei zunehmendem Druck des zuströmenden Fluids die pro Zeiteinheit durchströmende Fluidmenge auf einen festgelegten Maximalwert einzuregeln. Die Durchflussmengenregler 1, 2 oder 3 weisen dazu einen ringförmigen Drosselkörper 5 aus elastischem Material auf, der zwischen sich und einer Gehäusewandung 6 einen sich unter dem Druck des durchströmenden Fluids verändernden Steuerspalt 7 begrenzt. An der Gehäusewandung 6, die in den Fig. 1 bis 6 als eine den Drosselkörper 5 umgebende Umfangswandung ausgebildet ist, aber auch als ein vom Drosselkörper umgriffener Regelkörper ausgestaltet sein kann, ist eine aus Ausformungen und Einbuchtungen gebildete Regelprofilierung vorgesehen. Aus einem Vergleich der Fig. 1 und 2 wird deutlich, dass sich der elastische Drosselkörper 5 unter dem Druck des zuströmenden Fluids derart bis in die Regelprofilierung verformt, dass sich gleichzeitig der Steuerspalt 7 verengt.

Den Durchflussmengenreglern 1, 2 oder 3 ist ein zentraler By-Pass-Kanal 8 zugeordnet, der sich hier koaxial zur Längsachse der Durchflussmengenregler 1, 2 und 3 durch diese mittig hindurch erstreckt. Während der Kanal-Einlass 9 dieses By-Pass-Kanals 8 in Strömungsrichtung vor dem Steuerspalt 7 angeordnet ist, ist dessen Kanal-Auslass 10 in Strömungsrichtung hinter dem Steuerspalt 7 vorgesehen. In diesem By-Pass-Kanal 8, hier im Bereich des Kanal-Einlasses 9, ist ein Ventil 11 vorgesehen, das sich unter dem Druck des zuströmenden Fluids von einer Offenstellung gegen eine Rückstellkraft in eine Schließstellung bewegt, in welcher das Ventil 11 den By-Pass-Kanal 8 verschließt.

Während die Durchflussmengenregler 1, 2 und 3 in den Fig. 1, 3 und 5 und 7 in ihrer unbelasteten Offenstellung dargestellt sind, zeigen die Fig. 2, 4 und 6 die Durchflussmengenregler 1, 2 und 3 in der unter dem Druck des Fluids belasteten Schließstellung des Ventils 11.

In der Offenstellung des Ventils 11 kann durch den By-Pass-Kanal 8 zumindest eine zusätzliche Teilmenge des Volumenstroms ungehindert durchfließen. Steigt der Druck des durchströmenden Fluids und wird ein festgelegter Druck überschritten, bewegt sich das Ventil von seiner Offenstellung gegen eine Rückstellkraft in seine Schließstellung, so dass der By-Pass-Kanal 8 verschlossen ist. Ist der By-Pass-Kanal 8 verschlossen, kann das durchströmende Fluid nur durch den Durchflussmengenregler 1, 2, 3 passieren, der mit dem pro Zeiteinheit erhöhten Volumenstrom seine Regelfunktion aufnimmt. Im Vergleich zu vorbekannten Durchflussmengenreglern haben die hier dargestellten Durchflussmengenregler 1, 2, 3 eine Durchflusskurve, die im niederen Druckbereich signifikant erhöht ist, was zu einer enormen Komfortsteigerung für Anwendungen mit geringem Druck führt.

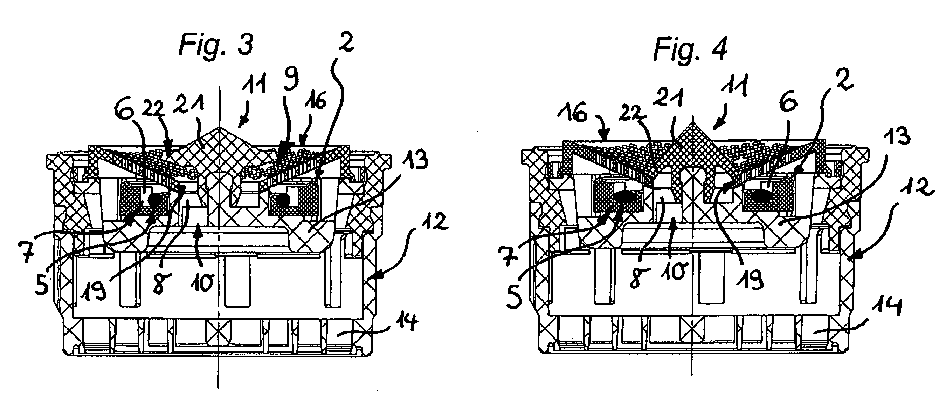

Den Durchflussmengenreglern 1, 2 und 3 in den Fig. 1 bis 6 ist ein Strahlregler 12 in Strömungsrichtung nachgeschaltet, der den aus der Auslaufarmatur ausströmenden Wasserstrahl zu einem homogenen, nicht-spritzenden und gegebenenfalls perlend-weichen Gesamtstrahl formen soll. Die Strahlregler 12 weisen jeweils einen zuströmseitigen Strahlzerleger 13 auf, der das zuströmende Wasser in eine Vielzahl von Einzelstrahlen aufteilt. Während der Strahlregler 12 in den Fig. 1 und 2 sowie 5 und 6 einen Strahlzerleger 13 hat, der als Lochplatte ausgestaltet ist, weist der Strahlregler 12 in den Fig. 3 und 4 einen Strahlzerleger 13 auf, der als Diffusor ausgestaltet ist. Die Strahlregler 12 haben einen abströmseitigen Strömungsgleichrichter 14, der die gegebenenfalls belüfteten Einzelstrahlen wieder zu einem homogenen Gesamtstrahl vereint. Aus einem Vergleich der Fig. 1, 2, 5 und 6 einerseits und der Fig. 3 und 4 andererseits wird deutlich, dass die Strahlregler 12 in den Fig. 1, 2, 5 und 6 zusätzlich eine zwischen Strahlzerleger 13 und Strömungsgleichrichter 14 zwischengeschaltete Homogenisiereinrichtung aufweisen, die aus mehreren gitter- oder netzförmigen Sieben oder Einsetzteilen 15 gebildet ist.

Dem Steuerspalt 7 der Durchflussmengenregler 1, 2 und 3 ist ein Vorsatz- oder Filtersieb 16 vorgeschaltet, das eine konkave Trichterform hat. In den Fig. 1 bis 6 ist erkennbar, dass die zentrale Trichteröffnung der trichterförmigen Filtersiebe 16 als Kanal-Einlass 9 des By-Pass-Kanals 8 ausgestaltet ist. Somit kann das Vorsatz- oder Filtersieb 16 im Fluid mitgeführte Schmutzpartikel ausfiltern, wovor diese die Funktion des Durchflussmengenreglers 1, 2 und 3 und gegebenenfalls auch der ihm nachgeschalteten Funktionseinheiten beeinträchtigen können. Die ausgefilterten Schmutzpartikel können anschließend über den By-Pass-Kanal 8 abgeführt werden, wenn dessen Ventil 11 sich in der Offenstellung befindet. Dabei weist der By-Pass-Kanal 8 einen lichten Querschnitt auf, der im Vergleich zum Steuerspalt 7 des Durchflussmengenreglers 1, 2, 3 wesentlich größer ist. Bei den Durchflussmengenreglern 1, 2, 3 zeichnet sich der By-Pass-Kanal 8 somit auch durch eine zusätzliche Reinigungsfunktion aus.

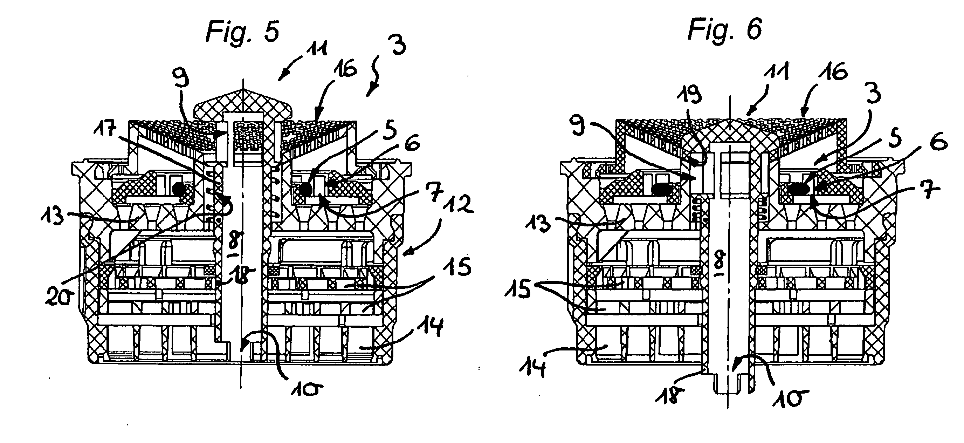

In den Fig. 1 bis 6 wird deutlich, dass die Durchflussmengenregler 1, 2, 3 ringförmig ausgestaltet sind und die den By-Pass-Kanal 8 umgrenzende Kanalwandung umgreifen.. Während der Kanal-Auslass 10 des By-Pass-Kanals 8 bei den Durchflussmengenreglern 1, 2 in den Fig. 1 bis 4 in Strömungsrichtung hinter dem Steuerspalt des Durchflussmengenreglers 1, 2 und dem Strahlzerleger 13 des Strahlreglers 12 - noch vor dem Strömungsgleichrichter 14 und den gitter- oder netzförmigen Sieben 15 der Homogenisiereinrichtung - angeordnet ist, ist der Kanal-Auslass 10 bei dem in Fig. 5 und 6 dargestellten Durchflussmengenregler 3 derartig in Strömungsrichtung hinter dem Strahlregler 12 angeordnet, dass der durch den By-Pass-Kanal 8 fließende und gegebenenfalls mit Schmutzpartikeln belastete Anteil des Fluids weder den Durchflussmengenregler 3 noch die Bestandteile des Strahlreglers 12 passieren muss.

Das Ventil 11 des in den Fig. 5 und 6 gezeigten Durchflussmengenreglers 3 weist dazu einen Ventilkörper 17 auf, der einen im Durchflussmengenregler 3 verschieblich geführten Führungszapfen 18 hat. Dieser Führungszapfen 18 ist rohrförmig ausgestaltet, wobei das Rohrinnere des rohrförmigen Führungszapfens 18 als By-Pass-Kanal 8 ausgestaltet ist. Während im zuströmseitigen Endbereich des Führungszapfens 18 zumindest ein Kanal-Einlass 9 vorgesehen ist, ist im abströmseitigen Endbereich des Führungszapfens 18 wenigstens ein Kanal-Auslass 10 angeordnet. Dieser abströmseitige Teilbereich des Ventilkörpers 17 steht bis zum Wasser-Auslass vor und ist als Handhabe auch zum manuellen Betätigen des Ventils 11 ausgestaltet. Durch manuelles Drücken des über den Wasser-Auslass vorstehenden und als Kanal-Auslass 10 dienenden Endbereichs des Führungszapfens 18 können die im Vorsatz- oder Filtersieb 16 eventuell angesammelten Schmutzpartikel jederzeit aus dem Bereich des Durchflussmengenreglers 3 abgeführt werden. Da das Ventil 11 bei nachlassendem Druck des zuströmenden Fluids durch die Rückstellkraft automatisch öffnet, sind aber auch automatische Reinigungsvorgänge möglich. Damit der als Kanal-Auslass 10 dienende Endbereich des Führungszapfens 18 durch manuelle Druckbeaufschlagung mit einer Fingerspitze nicht wieder verschlossen wird, ist der abströmseitige Endbereich des Führungszapfens 18 kronenförmig ausgestaltet.

Aus Fig. 6 wird deutlich, dass der den Kanal-Einlass 9 umgrenzende Randbereich 19 des Vorsatz- oder Filtersiebes 16 als Ventilsitz ausgestaltet ist, der mit dem zuströmseitigen und hier hut- oder pilzförmig ausgestalteten endbereich des ventilkörpers 17 zusammenwirkt. Unterhalb des zuströmseitigen Endbereichs des Ventilkörpers 17 sind umfangsseitig die als Kanal-Einlass 9 vorgesehenen Wandungsöffnungen angeordnet.

Das in den Fig. 5 und 6 dargestellte Ventil 11 weist eine Rückstellfeder 20 auf, welche die Rückstellkraft aufbringt. Demgegenüber ist der zuströmseitige und hier ebenfalls hut- oder pilzförmig ausgestaltete Ventilkörper 21 des in den Fig. 1, 2, 3 und 4 dargestellten Ventils 11 zumindest in einem stirnförmigen Teilbereich elastisch ausgestaltet und hat eine außenumfangsseitige Dichtlippe 22, wobei der schirmförmige Teilbereich von einer Offenstellung gegen die Elastizität des elastischen Materials in eine Schließstellung bewegbar ist.

Wie beispielsweise aus den Fig. 1 und 2 deutlich wird, ist der dem Durchflussmengenregler 1 zugeordnete Strahlregler 12 selbstreinigend ausgestaltet. Während der unterhalb dem Vorsatzsieb 16 angeordnete Durchflussmengenregler 1 in Fig. 1 in nahezu drucklosem Zustand dargestellt ist, ist der Durchflussmengenregler 1 in Fig. 2 demgegenüber bei anliegendem Fließdruck geneigt, wobei sich der im Zentrum befindliche, in seinem zuströmseitigen Endbereich pilz- oder hutförmig ausgestaltete und am Strahlzerleger 13 verankerte Ventilkörper 21 sowie der unter dem Vorsatz- oder Filtersieb 16 befindliche Drosselkörper 5 verformt haben. In den Fig. 3 und 4 ist der Durchflussmengenregler 2 und der ihm nachgeschaltete Strahlregler 12 vergleichbar ausgestaltet, jedoch weist der Strahlregler 12 statt einer Lochplatte einen Diffusor als Strahlzerleger 13 auf und zwischen Strahlzerleger 13 und Strömungsgleichrichter 14 ist eine Homogenisiereinrichtung mit weiteren Sieben oder Einsetzteilen 15 vorgesehen. Die aus Durchflussmengenregler 3 und Strahlregler 12 gebildete Einbaueinheit in den Fig. 5 und 6 ist als "Heavy Duty"-Ausführung ausgestaltet, bei welcher der Schmutz durch den als Spühlrohr dienenden Führungszapfen 18 durch den Strahlregler 12 durchgeleitet wird.

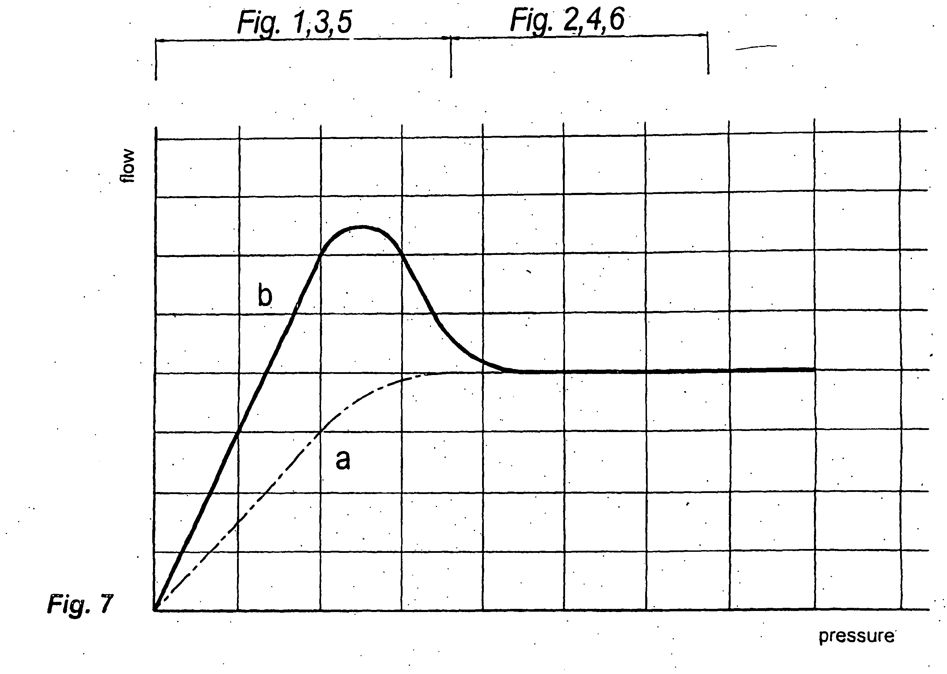

In Fig. 7 ist die Durchflusskurve a eines nach dem Stand der technik ausgestalteten Durchflussmengenreglers dargestellt. Demgegenüber zeigt der Kurvenverlauf b das Verhalten eines erfindungsgemäß mengengeregelten Strahlreglers mit einem By-Pass-Kanal 8, wie anhand der Fig. 1 bis 6 beschrieben. Den in den Fig. 1 bis 6 dargestellten Ausführungen ist gemeinsam, dass die Durchflusskurve der Durchflussmengenregler 1, 2, 3 in niederem Druckbereich signifikant erhöht wird, was zu einer enormen Komfortsteigerung für Anwendungen mit geringem Druck führt.

## Patentansprüche

1. Sanitäre Einsetzpatrone, die in eine sanitäre Flüssigkeitsleitung einsetzbar ist und einen Durchflussmengenregler (1, 2, 3) mit einem elastischen Drosselkörper (5) hat, der zwischen sich (5) und einer Gehäusewandung (6) einen sich unter dem Druck des durchströmenden Fluids verändernden Steuerspalt (7) begrenzt, wobei dem Durchflussmengenregler (1, 2, 3) zumindest ein By-Pass-und/oder Reinigungskanal (8) zugeordnet ist, dessen wenigstens einer Kanal-Einlass (9) in Strömungsrichtung vor dem Steuerspalt (7) und dessen mindestens einer Kanal-Auslass (10) in Strömungsrichtung nach dem Steuerspalt (7) angeordnet ist, und wobei im By-Pass- und/oder Reinigungskanal (8) ein sich unter dem Druck des zuströmenden Fluids von einer Offenstellung gegen eine Rückstellkraft in eine Schließstellung bewegbares Ventil (11) vorgesehen ist, das in seiner Schließstellung den By-Pass- und/oder Reinigungskanal (8) verschließt, **dadurch gekennzeichnet, dass** der Durchflussmengenregler (1, 2, 3) zwischen einem Vorsatz- oder Filtersieb (16) und einem Strahlregler (12) angeordnet ist, dass der Kanal-Einlass (9) des By-Pass- und/oder Reinigungskanals (8) zuströmseitig vor dem Vorsatz- oder Filtersieb (16) angeordnet ist, und dass der Kanal-Auslass (10) des By-Pass- und/oder Reinigungskanals (8) dem Strahlregler (12) oder zumindest einem Strahlzerleger (13) des Strahlreglers (12) abströmseitig nachgeschaltet ist.

2. Einsetzpatrone nach Anspruch 1, **dadurch gekennzeichnet, dass** das Vorsatz- oder Filtersieb (16) trichterförmig ausgestaltet und die Trichteröffnung als Kanal-Einlass (9) ausgebildet ist.

3. Einsetzpatrone nach Anspruch 1 oder 2, **dadurch gekennzeichnet, dass** der Durchflussmengenregler (1, 2, 3) ringförmig ausgestaltet ist und die den By-Pass-und/oder Reinigungskanal (8) umgrenzende Kanalwandung umgreift.

4. Einsetzpatrone nach einem der Ansprüche 1 bis 3, **dadurch gekennzeichnet, dass** das Ventil (11) einen Ventilkörper (17) hat, der im Durchflussmengenregler (3) gegen eine Rückstellkraft verschieblich geführt ist.

5. Einsetzpatrone nach Anspruch 4, **dadurch gekennzeichnet, dass** ein durch den Durchflussmengenregler (3) und gegebenenfalls auch durch den ihm nachgeschalteten Strahlregler (12) hindurchgeführter und zumindest bis zum Wasserauslauf vorstehender Teilbereich des Ventilkörpers (17) als Handhabe zum manuellen Betätigen des Ventils (11) ausgestaltet ist.

6. Einsetzpatrone nach Anspruch 4 oder 5, **dadurch gekennzeichnet, dass** der Ventilkörper (17) einen im Durchflussmengenregler (3) verschieblich geführten Führungszapfen (18) hat.

7. Einsetzpatrone nach Anspruch 6, **dadurch gekennzeichnet, dass** der Führungszapfen (18) rohrförmig ausgestaltet ist, dass das Rohrinnere des Führungszapfens (18) als By-Pass- und/oder Reinigungskanal (8) ausgestaltet ist, und dass im zuströmseitigen Endbereich des Führungszapfens (18) zumindest ein Kanal-Einlass (9) und im abströmseitigen Endbereich des Führungszapfens (18) wenigstens ein Kanal-Auslass (10) vorgesehen ist.

8. Einsetzpatrone nach Anspruch 6 oder 7, **dadurch gekennzeichnet, dass** die abströmseitige und vorzugsweise zumindest bis zum Wasser-Auslass vorstehende Stirnöffnung des Führungszapfens (18) als Kanal-Auslass (10) ausgestaltet ist.

9. Einsetzpatrone nach einem der Ansprüche 6 bis 8, **dadurch gekennzeichnet, dass** der abströmseitige Endbereich des Führungszapfens (18) kronenförmig ausgestaltet ist.

10. Einsetzpatrone nach einem der Ansprüche 4 bis 9, **dadurch gekennzeichnet, dass** der Ventilkörper (17, 21) pilz- oder tellerförmig ausgestaltet ist.

11. Einsetzpatrone nach einem der Ansprüche 4 bis 10, **dadurch gekennzeichnet, dass** der Ventilkörper (21) zumindest in einem schirmförmigen Teilbereich elastisch ausgestaltet ist und außenumfangsseitig eine umlaufende Dichtlippe (22) hat und dass der schirmförmige Teilbereich von einer Offenstellung gegen die Elastizität des elastischen Materials in eine Schließstellung bewegbar ist.

12. Einsetzpatrone nach einem der Ansprüche 4 bis 11, **dadurch gekennzeichnet, dass** der dem Kanal-Einlass (9) umgrenzende Randbereich (19) des Vorsatz- oder Filtersiebes (16) als mit dem Ventilkörper (17) zusammenwirkender Ventilsitz ausgestaltet ist.

13. Einsetzpatrone nach einem der Ansprüche 2 bis 12, **dadurch gekennzeichnet, dass** das trichterförmige Vorsatz- oder Filtersieb (16) eine im wesentlich konvexe oder konkave Trichterform hat.

## Claims

1. Insertable plumbing cartridge which can be Inserted in a plumbing pipe and has a flow rate regulator (1, 2, 3) with an elastic throttle member (5) which delimits, between itself (5) and a housing wall (6), a control slot (7) that varies under the pressure of the fluid flowing through, wherein the flow rate regulator (1, 2, 3) Is associated with at least one bypass and/or cleaning channel (8) having at least one channel inlet (9) which is arranged before the control slot (7) in the direction of flow and at least one channel outlet (10) which is arranged after the control slot (7) in the direction of flow, and wherein a valve (11) is provided in the bypass and/or cleaning channel (8), which can be moved under the pressure of the inflowing fluid, counter to a restoring force, from an open position into a closed position, said valve closing off the bypass and/or cleaning channel (8) in its closed position, **characterised in that** the flow rate regulator (1, 2, 3) is arranged between a preliminary or filtering sieve (16) and a jet regulator (12), **in that** the channel inlet (9) of the bypass and/of cleaning channel (8) is arranged before the preliminary or filtering sieve (16) on the inflow side, and **in that** the channel outlet (10) of the bypass and/or cleaning channel (8) is arranged downstream of the jet regulator (12) or at least one jet breakdown device (13) in the jet regulator (12).

2. Insertable cartridge according to claim 1, **characterised in that** the preliminary or filtering sieve (16) is of funnel-shaped construction and the funnel opening is configured as a channel inlet (9).

3. Insertable cartridge according to claim 1 or 2, **characterised in that** the flow rate regulator (1, 2, 3) is of annular configuration and surrounds the channel wall that bounds the bypass and/or cleaning channel (8).

4. Insertable cartridge according to one of claims 1 to 3, **characterised in that** the valve (11) has a valve body (17) which is movably guided within the flow rate regulator (3) counter to a restoring force.

5. Insertable cartridge according to claim 4, **characterised in that** a partial region of the valve body (17) that passes through the flow rate regulator (3) and optionally also the jet regulator (12) provided downstream thereof, and projects at least as far as the water outlet, is constructed as a handle for manually operating the valve (11).

6. Insertable cartridge according to claim 4 or 5, **characterised in that** the valve body (17) has a guide pin (18) that is movably guided within the flow rate regulator (3).

7. Insertable cartridge according to claim 6, **characterised in that** the guide pin (18) is of tubular construction, **in that** the tubular interior of the guide pin (18) is constructed as a bypass and/or cleaning channel (8), and **in that** at least one channel inlet (9) is provided in the end region of the guide pin (18) on the inflow side and at least one channel outlet (10) is provided in the end region of the guide pin (18) on the outflow side.

8. Insertable cartridge according to claim 6 or 7, **characterised in that** the end opening of the guide pin (18) on the outflow side, which preferably protrudes as far as the water outlet, is configured as a channel outlet (10).

9. Insertable cartridge according to one of claims 6 to 8, **characterised in that** the end opening of the guide pin (18) on the outflow side is crown-shaped.

10. Insertable cartridge according to one of claims 4 to 9, **characterised in that** the valve body (17, 21) is in the shape of a mushroom or plate.

11. Insertable cartridge according to one of claims 4 to 10, **characterised in that** the valve body (21) is designed to be elastic, at least in an umbrella-shaped partial region, and has a circumferential sealing lip (22) around its outer periphery and **in that** the umbrella-shaped partial region is movable from an open position into a closed position counter to the elasticity of the elastic material.

12. Insertable cartridge according to one of claims 4 to 11, **characterised in that** the edge region (19) of the preliminary or filtering sieve (16) bordering the channel inlet (9) is constructed as a valve seat cooperating with the valve body (17).

13. Insertable cartridge according to one of claims 2 to 12, **characterised in that** the funnel-shaped preliminary or filtering sieve (16) has a substantially convex or concave funnel shape.

## Revendications

1. Cartouche d'insertion sanitaire, qui peut être insérée dans une conduite de liquide sanitaire et qui possède un régulateur de débit (1, 2, 3) avec un corps d'étranglement élastique (5), qui délimite entre lui-même (5) et une paroi de boîtier (6) une fente de commande (7) se modifiant sous la pression du fluide qui s'écoule, sachant qu'au moins un canal (8) de dérivation et/ou de nettoyage est associé au régulateur de débit (1, 2, 3), canal dont l'entrée de canal au moins unique (9) est disposée avant la fente de commande (7) dans la direction d'écoulement et dont la sortie de canal au moins unique (10) est disposée après la fente de commande (7) dans la direction d'écoulement, et sachant qu'une soupape (11) pouvant être déplacée d'une position ouverte dans une position fermée sous la pression du fluide entrant et à l'encontre d'une force de rappel est prévue dans le canal (8) de dérivation et/ou de nettoyage, soupape, qui dans sa position fermée, ferme le canal (8) de dérivation et/ou de nettoyage, **caractérisé en ce que** le régulateur de débit (1, 2, 3) est disposé entre un tamis (16) de préfiltration ou de filtration et un régulateur de jet (12), **en ce que** l'entrée de canal (9) du canal (8) de dérivation et/ou de nettoyage est disposée, du côté du flux entrant, avant le tamis (16) de préfiltration ou de filtration, et **en ce que** la sortie de canal (10) du canal (8) de dérivation et/ou de nettoyage est montée, du côté du flux sortant, après le régulateur de jet (12) ou au moins un fractionneur de jet (13) du régulateur de jet (12).

2. Cartouche d'insertion selon la revendication 1, **caractérisée en ce que** le tamis (16) de préfiltration ou de filtration est réalisé en forme d'entonnoir, et l'ouverture de l'entonnoir est conçue comme entrée de canal (9).

3. Cartouche d'insertion selon la revendication 1 ou 2, **caractérisée en ce que** le régulateur de débit (1, 2, 3) est réalisé de forme annulaire, et s'engage autour de la paroi de canal circonscrivant le canal (8) de dérivation et/ou de nettoyage

4. Cartouche d'insertion selon l'une des revendications 1 à 3, **caractérisée en ce que** la soupape (11) possède un corps de soupape (17) qui est guidé en déplacement dans le régulateur de débit (3) à l'encontre d'une force de rappel.

5. Cartouche d'insertion selon la revendication 4, **caractérisée en ce qu'**une région partielle du corps de soupape (17), laquelle traverse le régulateur de débit (3) et éventuellement aussi le régulateur de jet (12) monté en aval de celui-ci, et dépasse au moins jusqu'à la sortie d'eau, est conçue comme manette pour l'actionnement manuel de la soupape (11).

6. Cartouche d'insertion selon la revendication 4 ou 5, **caractérisée en ce que** le corps de soupape (17) possède un tenon de guidage (18) guidé en déplacement dans le régulateur de débit (3).

7. Cartouche d'insertion selon la revendication 6, **caractérisée en ce que** le tenon de guidage (18) est réalisé en forme de tube, **en ce que** l'intérieur du tube du tenon de guidage (18) est conçu comme canal (8) de dérivation et/ou de nettoyage, et **en ce qu'**au moins une entrée de canal (9) est prévue dans la région terminale côté flux entrant du tenon de guidage (18), et au moins une sortie de canal (10) est prévue dans la région terminale côté flux sortant du tenon de guidage (18).

8. Cartouche d'insertion selon la revendication 6 ou 7, **caractérisée en ce que** l'ouverture frontale du tenon de guidage (18) située du côté du flux sortant et dépassant de préférence au moins jusqu'à la sortie d'eau est conçue comme sortie de canal (10).

9. Cartouche d'insertion selon l'une des revendications 6 à 8, **caractérisée en ce que** la région terminale du tenon de guidage (18) située du côté du flux sortant est réalisée en forme de couronne.

10. Cartouche d'insertion selon l'une des revendications 4 à 9, **caractérisée en ce que** le corps de soupape (17, 21) est réalisé en forme de champignon ou de plateau.

11. Cartouche d'insertion selon l'une des revendications 4 à 10, **caractérisée en ce que** le corps de soupape (21) est réalisé élastique au moins dans une région partielle en forme de parapluie et possède sur sa circonférence extérieure une lèvre d'étanchéité périphérique (22), et **en ce que** la région partielle en forme de parapluie peut être déplacée d'une position ouverte dans une position fermée à l'encontre de l'élasticité du matériau élastique.

12. Cartouche d'insertion selon l'une des revendications 4 à 11, **caractérisée en ce que** la région de bord (19), circonscrivant l'entrée de canal (9), du tamis (16) de préfiltration ou de filtration est réalisée sous forme de siège de soupape coopérant avec le corps de soupape (17).

13. Cartouche d'insertion selon l'une des revendications 2 à 12, **caractérisée en ce que** le tamis (16) de préfiltration ou de filtration en forme d'entonnoir possède une forme d'entonnoir essentiellement convexe ou concave.
